# EUROPEAN PATENT APPLICATION

(11) **EP 4 585 444 A1**
(43) Date of publication of application: **16.07.2025**
(21) Application number: 24151812.5
(22) Date of filing: 15.01.2024
(51) Int. Cl.: B60L 1/00, B60L 58/20, B60L 58/22, H02J 1/08, B60L 3/00, B60L 3/04, H02M 1/00

(54) **DC-DC CONVERTERS FOR VEHICLES**

(71) Applicant: Aptiv Technologies AG, 8200 Schaffhausen (CH)
(72) Inventor: GRONAU, Frank, 42109 Wuppertal (DE); MIKULEC, Dragan, Erlangen 91052 (US); GRIMMER, Niclas, 43644 Askim (SE); NG, Cheuk, Bloomfield Hills 48301 (US); SVENSSON, Magnus, Floda 44831 (SE); ROJAS, Sergi, Parsdorf 85599 (US); FUCHS, Andreas, 51067 Köln (DE); PUETZ, Tim, 50735 Köln (DE); PANTEA, Vlad, 41476 Gothenburg (SE); MOORE, Stephen, Fishers 46037 (US); SCHAEFER, Christian, 44879 Bochum (DE)
(74) Representative: Bardehle Pagenberg Partnerschaft mbB Patentanwälte Rechtsanwälte

(57) **Abstract**

The present invention relates to a system (1) for supplying a low DC voltage to a vehicle from high voltage batteries (2a, 2b) of the vehicle, comprising a first DC-DC converter (3a) configured to convert a high DC voltage from a first battery (2a) of the vehicle to a low DC voltage; a second DC-DC converter (3b) configured to convert a high DC voltage from a second battery (2b) of the BEV to the low DC voltage; a third DC-DC converter (3c) with a lower output power compared to the first (3a) and second (3b) DC-DC converters and configured to convert a high DC voltage from the batteries (2a, 2b) of the vehicle to the low DC voltage, wherein the first DC-DC converter (3a) is configured to be connected to the first battery (2a), wherein the second DC-DC converter (3b) is configured to be connected to the second battery (2b), and wherein the third DC-DC converter is configured to be connected to the first (2a) and the second (2b) battery in series.

## Description

### Technical field

The present invention relates to a system for supplying a low DC voltage to a vehicle from high voltage batteries of the vehicle.

### Technical background

Modern electric vehicles such as battery electric vehicles (BEVs), hybrid electric vehicles (HEVs), plug-in hybrid electric vehicles (PHEVs) and fuel cell electric vehicles (FCEVs), often comprise a battery with a comparably high output voltage to power one or more electric motors of the vehicle. In case of a BEV or FCEV, an electric motor is the only engine used to propel the vehicle. HEVs and PHEVs on the other hand comprise an electric motor besides a combustion engine. For efficiency reasons, such electric motors are operated with a rather high voltage of e.g. 400V, 800V or even more.

On the other hand, vehicles comprise an electrical system for powering electric loads such as control units, entertainment systems, navigation systems, driver assistance systems, air conditioning, actuators, seat heating, advanced driver assistance systems (ADAS) and so on. Nowadays, autonomous or semiautonomous vehicles are more and more common, which comprise a number of electronic components to be fed by the electrical system. This electrical system usually has a comparably low voltage of e.g. 12V, 24V or 48V.

Therefore, even a vehicle that comprise an electric power supply as a matter of principle such as a BEV, HEV, PHEV or FCEV comprise an additional low voltage battery to supply the electrical and electronic components of the vehicle. This has several disadvantages. First, an additional battery adds to the total weight of the vehicle which increases fuel and/or power consumption and reduces the range of the vehicle. Second, low voltage vehicle batteries are designed for the typical load cycle of a conventional combustion engine vehicle. With fully electric or hybrid vehicles, the load cycle is very different resulting in a quicker deterioration and failure of the low voltage battery.

Therefore, there are attempts to omit the low voltage vehicle battery and to supply the electrical system of electric or semi-electric vehicles using the high voltage traction battery. This requires direct current-to-direct current (DC-DC) converters in order to transform the high voltage output of the battery (e.g. 400V) to the low voltage required by the electrical system of the vehicle (e.g. 12V). However, some electrical components of the vehicle must also be supplied when the vehicle is at a standstill, which are so-called key-off loads. Examples include alarm system/immobilizer, entertainment/info-tainment system, park heating and air conditioning. Moreover, modern cars are often wirelessly connected, e.g. via a mobile communications network such as 4G or 5G even when the engine is off. The corresponding connectivity units need to be powered all the time.

Thus, the mentioned DC-DC converters must efficiently operate over a wide range of power output levels to supply the vehicle's electrical system both at key-off and key-on states. In addition, some electrical loads may have an automotive safety integrity level (ASIL) and require certain safety requirements. Depending on the safety level of such loads, some power consuming devices must be supplied redundantly by two low voltage power rails.

### Summary of the Invention

The present invention addresses those needs by the subject matter of the independent claims. Advantageous embodiments are defined in the dependent claims.

Accordingly, the present invention relates to a system for supplying a low DC voltage to a vehicle from high voltage batteries of the vehicle, comprising a first DC-DC converter configured to convert a high DC voltage from a first battery of the vehicle to a low DC voltage; a second DC-DC converter configured to convert a high DC voltage from a second battery of the BEV to the low DC voltage; a third DC-DC converter with a lower output power compared to the first and second DC-DC converters and configured to convert a high DC voltage from the batteries of the vehicle to the low DC voltage, wherein the first DC-DC converter is configured to be connected to the first battery, wherein the second DC-DC converter (3b) is configured to be connected to the second battery, and wherein the third DC-DC converter is configured to be connected to the first and the second battery in series.

The present invention is not limited to be applied to two distinct batteries (the "first battery" and the "second battery"). Rather, the present invention also encompasses the case of just a single battery. In this case, the "first battery" may be a first portion or section of the single battery and the "second battery" may be a second portion or section of the single battery. Moreover, in this case, the term "high voltage batteries" is to be understood as a single battery having multiple portions or sections (at least two). For example, a single battery may comprise multiple battery cells being stacked and comprise multiple power outputs. Also, it should be noted that the batteries as such are not part of the system according to the invention.

In the context of the present invention a DC-DC converter (direct current to direct current converter) is understood as an electronic circuit or electromechanical device that converts a source of direct current (DC) from one voltage level to another. Thus, the first, second and third DC-DC converters take as input a high voltage from the high voltage batteries and convert the same to a low voltage which is lower compared to the high voltage.

The first DC-DC converter and the second DC-DC converter may be configured to provide the low DC voltage in a key-on state of the vehicle and the third DC-DC converter may be configured to provide the low DC voltage in a key-off state of the vehicle. In this way, the first and the second DC-DC converters can operate in their optimal domain which is a high power mode, whereas the third DC-DC converter can operate in its optimal domain as well, which is a low power mode. In addition, the first and second DC-DC converter can supply power redundantly in a key-on state which increases fault-safety and reliability.

In the context of the present invention "key-on state" is understood as the state of the vehicle in which power may be immediately provided to the main engine of the vehicle such that the state of motion of the vehicle is altered (e.g., the vehicle starts moving, is accelerated or decelerated). In the "key-off state", no power can be provided to the main engine and the vehicle is usually in a parking state. In addition, in the key-on state, electrical power is provided to certain electrical loads but not in the key-off state.

Examples include all systems that are needed for driving such as actuators, control units, driver assistance systems, etc.

The first DC-DC converter and the second DC-DC converter may be configured to provide electrical power in the key-on state in a high power mode with active cooling. This increases the efficiency of the system as active cooling is only active in the key-on state in which power consumption is much higher compared to the key-off state. In the key-off state, the power consumption is generally lower, such that no active cooling is required. Active cooling of the DC-DC converters may be achieved by liquid cooling, air cooling using a fan, a thermal evaporator, etc. The electrical power needed for these cooling measures is not required in the key-off state.

The third DC-DC converter may be configured to provide electrical power in the key-off state with passive cooling only. Passive cooling generally means that no additional device is running for cooling to keep quiescent current low. It may include the usage of materials having a good heat conduction, vents for heat exchange by (passive) air circulation, cooling fins, etc. These measures do not require additional electrical power for cooling in the low power mode of the third DC-DC converter which is cost-efficient, but also adds to the fault-safety and robustness of the system as active cooling components would introduce additional points of failure.

The third DC-DC converter may be configured to be electrically connected directly to the batteries without any switches in between. In this way, the third DC-DC converter may provide power in the key-off state. On the other hand, the first and second DC-DC converter may be connected to the batteries downstream of power switches controlling the motor because their output voltage is required in the key-on state only but not in the key-off state. Thus, the first and second DC-DC converters can be placed outside of the battery.

The system for supplying a low DC voltage to a vehicle from high voltage batteries of the vehicle may further comprise at least one power distribution unit configured to provide the low DC voltage to a plurality of loads, wherein the power distribution unit is electrically connected to the second DC-DC converter and selectively to either the first DC-DC converter or the third DC-DC converter. The power distribution unit allows to distribute the low DC voltage to loads within the vehicle. In a key-off state, the third DC-DC converter provides power to the power distribution unit, whereas in a key-on state the first and second DC-DC converter provide power to the power distribution unit. Thus, any loads connected to the power distribution unit can be supplied with electrical power in both the key-off state and the key-on state. Furthermore, the first and second DC-DC converters can supply power in the key-on state redundantly which increases robustness and fail-safety. In addition to voltage, the power distribution unit may also distribute data by means of a corresponding data bus or aggregate data from sensors and peripherals as well as distribute data to actuators. Thus, the power distribution unit may be a zone controller.

The system may be configured such that in a key-on state of the vehicle the first DC-DC converter is electrically connected to the power distribution unit and in a key-off state the third DC-DC converter is electrically connected to the power distribution unit. As explained above, this allows to permanently supply loads connected to the power distribution unit with electrical power.

The power distribution unit may be configured to electrically connect each load of the plurality of loads to either the first DC-DC converter or to either the second or third DC-DC converter. Thus, the power distribution unit is connected to two DC-DC converters, such that in case of a failure of one of the DC-DC converters safety-critical loads may still be supplied with power. This is in particular the case in a key-on state in which the power distribution unit may switch between the first and second DC-DC converter operating in a high power mode. Non-safety critical loads, so called quality management (QM) loads, may be switched off in case of a failure of one of the DC-DC converters. Thus, the faultless DC-DC converter may safely be operated and supply voltage to safety-critical loads even in case of a failure of the other DC-DC converter.

Generally, the system may comprise more than one power distribution unit. The DC-DC converters may be connected to all power distribution units in the vehicle. At least, the first and the second DC-DC converter may be connected to all power distribution units in the vehicle supplying safety-critical loads. In this way, fault-safety and robustness is increased. Power distribution units which only supply quality management loads may be connected to one DC-DC converter.

The power distribution unit may be configured to actively distribute the plurality of loads among the first DC-DC converter and the second DC-DC converter, such that the first battery and the second battery are essentially balanced. Battery balancing may improve the available capacity of a plurality of batteries or of single batteries with multiple portions, sections or cells and increase the longevity of batteries. Batteries naturally may have somewhat different capacities, and so, over the course of charge and discharge cycles, may be at a different state of charge. Thus, balancing considers the different capacities and may, for example, draw the highest current from the most charged battery. According to the invention, balancing may be achieved by distributing the loads among the DC-DC converters which is a simple, yet effective way of balancing the batteries.

The power distribution unit may comprise at least one switch to separate quality management loads from safety-critical loads. Quality management loads may be loads that are not safety-critical such as heating, air conditioning and entertainment systems. The power distribution unit may for example disconnect the quality management loads in case of a failure such that only the safety-critical loads are supplied with power.

The system for supplying a low DC voltage to a vehicle from high voltage batteries of the vehicle may further comprise a first electric main fuse box (eMFB) electrically connected to both, the first and the third DC-DC converter to supply selectively loads either by the first DC-DC converter or the third DC-DC converter, and to the first power distribution unit and the second power distribution unit; and a second eMFB electrically connected to the second DC-DC converter, the first power distribution unit and the second power distribution unit. In this way, both power distribution units are connected to at least the first and second DC-DC converter by means of respective eMFBs which increases fault-safety and robustness.

The system may further comprise a switch configured to selectively electrically connect either the first DC-DC converter or the third DC-DC converter to the first eMFB. In this way, power is selectively provided in the key-off state by the third DC-DC converter and in the key-on state by the first DC-DC converter. The further switch may be a part of an eMFB.

The low DC voltage mentioned herein may be a nominal voltage of 60V or less, preferably a nominal voltage of 12V, 24V or 48V. The low DC voltage is the output voltage of the DC-DC converters. As outlined above, typical loads (except for the main engine) in a vehicle are operated a 60V or less.

The high voltage mentioned herein may be a nominal voltage of more than 60V, preferably a nominal voltage of 200V, 400V, 800V or higher. The high voltage is usually supplied to the main engine to propel the vehicle. The DC-DC converters advantageously transform the high voltage supplied by the batteries to a low voltage to be fed to electrical loads within the vehicle. The system according to the invention allows to operate such loads in both key-on and key-off states without each DC-DC converter operating in its optimal power domain. Moreover, safety-critical loads can be operated as the first and second DC-DC converters arranged according to the invention provide fault safety and robustness.

The high voltage batteries may be adapted to power an electric motor of the vehicle. As outlined above, the system according to the invention advantageously allows to operate low voltage loads from the high voltage of traction batteries in a cost-efficient and fail-safe manner.

### Brief Description of the Drawings

Possible embodiments of the invention are described in more detail in the following detailed description with reference to the following figure:

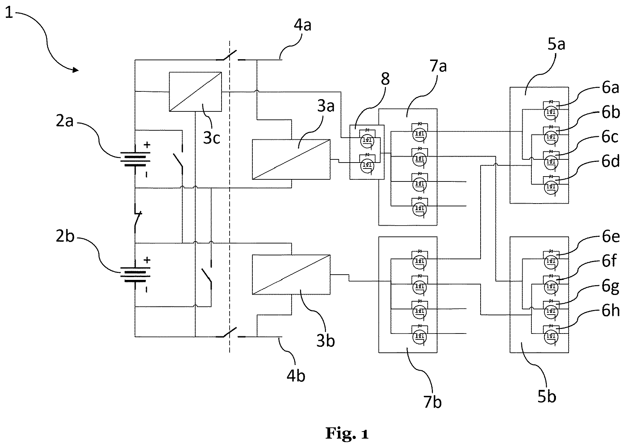

Fig. 1 illustrates an exemplary embodiment of the present invention.

### Detailed Description of Possible Embodiments

For the sake of brevity, only a few embodiments will be described below. The person skilled in the art will recognize that the features described with reference to these specific embodiments may be modified and combined in different ways and that individual features may also be omitted. The general explanations in the sections above also apply to the more detailed explanations below.

Fig. 1 illustrates an embodiment of a system 1 for supplying a low DC voltage to a vehicle (not shown in Fig. 1) from high voltage batteries of the vehicle. The system 1 comprises a first DC-DC converter 3a configured to convert a high DC voltage provided by a first battery 2a of the vehicle to a low DC voltage, a second DC-DC converter 3b configured to convert a high DC voltage provided by a second battery 2b of the vehicle to a low DC voltage, and a third DC-DC converter 3c with a lower output power compared to the first 3a and second 3b DC-DC converters and configured to convert a high DC voltage from the batteries 3a and 3b of the vehicle to the low DC voltage. The batteries 2a and 2b are traction batteries that are used to power the main engine of the vehicle. Exemplary vehicles in which the invention can be implemented include battery electric vehicles (BEVs), hybrid electric vehicles (HEVs), plug-in hybrid electric vehicles (PHEVs) and fuel cell electric vehicles (FCEVs). The electrical motors of such vehicles are operated at comparably high voltages of e.g. more than 60V. Typical voltages include 200V, 400V, 800V or even higher. Typical batteries for such types of cars are based on electrochemical cells (e.g. lithium-ion batteries) with external connections in order to provide power to the vehicle.

The batteries provide electrical power to a main engine of the vehicle by means of the outputs 4a and 4b which would be connected to a traction inverter (not shown in Fig. 1). Also, corresponding main switches are shown just before the outputs 4a and 4b which disconnect all loads when the vehicle is shut off or in park mode. Thus, the batteries 2a and 2b would typically be inside a battery pack together with the DC-DC converter 3c, whereas the DC-DC converters 3a and 3b can be located outside of the battery pack.

In Fig. 1 the batteries 2a and 2b are shown as distinct components, i.e. a first battery 2a and a second battery 2b. However, in other embodiments, the first battery 2a may be a first portion or section of a single battery and the second battery 2b may be a second portion or section of the single battery. For example, the first battery 2a could comprise a first battery cell or cells and the second battery 2b could comprise a second battery cell or cells. In this case, the term "high voltage batteries" is to be understood as a single battery having multiple portions or sections (at least two). Also, it is to be understood that the batteries 2a and 2b are not part of the system 1. Rather, the DC-DC converters 3a and 3b of the system of the invention are configured to be electrically connected to the batteries 2a and 2b. Thus, the first DC-DC converter 3a is configured to be electrically connected to the first battery 2a, and the second DC-DC converter 3b is configured to be electrically connected to the second battery 2b. The connection can be a direct electrical connection without any switches in between and can be made by plugs or clamps for example.

In the example of Fig. 1 the first, second and third DC-DC converter 3a, 3b and 3c, respectively, are implemented as magnetic DC-DC converters. In these DC-DC converters, energy is periodically stored within and released from a magnetic field in an inductor or a transformer. Alternatively, other types of DC-DC converters could be used such as capacitive or switched-mode DC-DC converters. The output voltage of the first, second and third DC-DC converters 3a, 3b and 3c, respectively, is a low voltage which is lower than the high voltage at their inputs. Typically, the low voltage is 60V or less. Often, electrical systems of vehicles are operated at 12V, 24V or 48V and the DC-DC converters 3a, 3b and 3c could be adapted to supply such voltage levels at their outputs.

In the example of Fig. 1, the first DC-DC converter 3a and the second DC-DC converter 3b are configured to provide the low DC voltage in a key-on state of the vehicle. Typically, the DC-DC converters would be supplied with active cooling during key-on state because the number of active loads and power consumption in key-on state is higher compared to key-off state. Active cooling can be accomplished for example by liquid cooling, air cooling using a fan, a thermal evaporator, etc. In key-on state, the DC-DC converters 3a and 3b may for example provide electrical of up to 3kW.

In key-off state, power is provided by the third DC-DC converter 3c which would typically be operated without active cooling and using passive cooling only. Passive cooling can be accomplished by using materials having a good heat conduction, vents for heat exchange by (passive) air circulation, cooling fins, etc. In key-off state, the DC-DC converter 3c may for example provide electrical of up to 300W.

The system 1 of the exemplary embodiment of Fig. 1 also comprises two power distribution units 5a and 5b which are configured to provide the low DC voltage to a plurality of loads (not shown in Fig. 1). It should be noted that power distribution units are optional in the context of the present invention. Also, in the context of the present invention, the number of such power distribution units may be different from two, e.g. three or more.

In the exemplary embodiment of Fig. 1 the power distribution units 5a and 5b are electrically connected to the second DC-DC converter 3b and selectively to the first DC-DC converter 3a or the third DC-DC converter 3c. The power distribution units 5a and 5b distribute the low DC voltage to loads within the vehicle. As shown in Fig. 1, the power distribution units 5a and 5b are configured to electrically connect each load of the plurality of loads to either the second DC-DC converter 3b or selectively to the first DC-DC converter 3a or the third DC-DC converter 3c. To this end the first power distribution unit 5a comprises corresponding switches 6a, 6b, 6c and 6d. The second power distribution unit 5b comprises corresponding switches 6e, 6f, 6g and 6h. In other embodiments, the number of switches can be different. The switches in the embodiment of Fig. 1 are implemented on the basis of field effect transistors (FETs), e.g. as power metal-oxide-semiconductor field-effect transistors (MOSFETs).

The switches 6a, 6b, 6c, 6d, 6e, 6f, 6g and 6h can be controlled by microcontrollers which are either part of the power distribution units 5a and 5b or are separate components, e.g. in a control unit. The switches 6a, 6b, 6c, 6d, 6e, 6f, 6g and 6h in the power distribution units 5a and 5b allow to switch between an on-state in which the low voltage from the DC-DC converters 3a, 3b or 3c is supplied to a respective load connected to a switch, and an off-state in which no voltage is supplied to the load. Thus, loads can be selectively supplied with the low voltage.

In an example, the outputs of the power distribution units 5a and 5b associated with switches 6a, 6b, 6e and 6f could be connected to safety-critical loads, whereas the outputs associated with switches 6c, 6d, 6g and 6h could be connected to quality management loads. More specifically, the outputs associated with switches 6a and 6e could feed a first safety-critical load and the outputs associated with switches 6b and 6f could feed a second safety-critical load. Safety-critical loads would be connected to both rails such that even in case of failure of one of the batteries, DC-DC-converters, or eMFBs, the safety-critical loads would still be supplied with power. In contrast, quality management (QM) loads are not critical and can be powered down without causing any harm in case of failure. Thus, in the example, in case of a failure of one of the DC-DC converters, the switches 6c, 6d, 6g and 6h could shut down its corresponding QM loads, whereas the switches 6a, 6b, 6e and 6f are on, such that power from the remaining faultless DC-DC converter is supplied to the safety-critical loads.

The way of feeding safe-critical loads as described above allows to achieve a functional safety up to ASIL D level by so called ASIL B(D) decomposition. In that case, the batteries, DC-DC converters, eMBFs and zone controllers are ASIL B conform such that by redundantly and independently feeding safety critical loads from both branches achieves ASIL D conformity.

Also, in the example of Fig. 1, the loads associated with switches 6a, 6c, 6e and 6g are "always on" in the sense that in a key-off state power is supplied to those switches by the third DC-DC converter, whereas in a key-on state power is supplied to those switches by the first DC-DC converter by means of a switch 8 which will be explained below. By contrast, the loads associated with switches 6b, 6d, 6f and 6h are supplied with power in the key-on state only as they are electrically connected to the second DC-DC converter 3b only.

In the example of Fig. 1 two power distribution units 5a and 5b are shown. In other embodiments, the system 1 may comprise more than two power distribution units. In those embodiments, all DC-DC converters 3a, 3b and 3c or at least the first and second DC-DC converter 3a and 3b may be connected to all power distribution units. At least, the DC-DC converters 3a and 3b may be connected to all power distribution units supplying safety-critical loads.

In the exemplary embodiment of Fig. 1, the power distribution units 5a and 5b actively distribute the plurality of loads among the first DC-DC converter and the second DC-DC converter, such that the first battery 2a and the second battery 2b are essentially balanced. To this end, the switches 6a, 6b, 6c, 6d, 6e, 6f, 6g and 6h electrically connect a particular load to a particular DC-DC converter to achieve the desired power drain from a particular battery in relation to the power drain from the other battery.

In the exemplary embodiment of Fig. 1, the system 1 also comprises a first electric main fuse box (eMFB) 7a electrically connected to the first DC-DC converter 3a and to the third DC-DC converter 3c. On the other end, the eMFB 7a is electrically connected to the first power distribution unit 5a and the second power distribution unit 5b. A switch 8 is arranged between the first 3a and third 3c DC-DC converter and the eMFB 7a to selectively connect either the first DC-DC converter 3a or the third DC-DC converter 3c to the eMFB 7a depending on the state of the vehicle. Thus, in a key-off state, power is supplied by the third DC-DC converter 3c which is specifically adapted to operate in a low power mode preferably without active cooling. In a key-on state, power is provided by the first DC-DC converter 3a instead, which is specifically adapted to be operated in a high power mode preferably with active cooling.

The system 1 also comprises a second eMFB 7b electrically connected to the second DC-DC converter 3b. On the other end, the eMFB 7b is electrically connected to the first power distribution unit 5a and the second power distribution unit 5b. The eMFBs contain fuses that interrupt the current flow in case of overcurrent to protect loads, the DC-DC converters and the batteries.

## Claims

1. A system (1) for supplying a low DC voltage to a vehicle from high voltage batteries (2a, 2b) of the vehicle, comprising:
a first DC-DC converter (3a) configured to convert a high DC voltage from a first battery (2a) of the vehicle to a low DC voltage;
a second DC-DC converter (3b) configured to convert a high DC voltage from a second battery (2b) of the BEV to the low DC voltage;
a third DC-DC converter (3c) with a lower output power compared to the first (3a) and second (3b) DC-DC converters and configured to convert a high DC voltage from the batteries (2a, 2b) of the vehicle to the low DC voltage,
wherein the first DC-DC converter (3a) is configured to be connected to the first battery (2a),
wherein the second DC-DC converter (3b) is configured to be connected to the second battery (2b), and
wherein the third DC-DC converter is configured to be connected to the first (2a) and the second (2b) battery in series.

2. System (1) according to claim 1, wherein the first DC-DC converter (3a) and the second DC-DC converter (3b) are configured to provide the low DC voltage in a key-on state of the vehicle and the third DC-DC converter (3c) is configured to provide the low DC voltage in a key-off state of the vehicle.

3. System (1) according to one of claims 1-2, wherein the first DC-DC converter (3a) and the second DC-DC converter (3b) are configured to provide electrical power in the key-on state in a high power mode with active cooling.

4. System (1) according to one of claims 1-3, wherein the third DC-DC converter (3c) is configured to provide electrical power in the key-off state with passive cooling only.

5. System (1) according to one of claims 1-4, wherein the third DC-DC converter (3c) is configured to be electrically connected directly to the batteries (2a, 2b) without any switches in between.

6. System (1) according to one of claims 1-5, further comprising at least one power distribution unit (5a, 5b) configured to provide the low DC voltage to a plurality of loads, wherein the power distribution unit (5a, 5b) is electrically connected to the second DC-DC converter and selectively to either the first DC-DC converter (3a) or the third DC-DC converter (3c).

7. System (1) according to claim 6, wherein the system (1) is configured such that in a key-on state of the vehicle the first DC-DC converter (3a) is electrically connected to the power distribution unit (5a, 5b) and in a key-off state the third DC-DC converter (3c) is electrically connected to the power distribution unit (5a, 5b).

8. System (1) according to one of claims 6-7, wherein the power distribution unit (5a, 5b) is configured to electrically connect each load of the plurality of loads to either the first DC-DC converter (3a) or to either the second (3b) or third (3c) DC-DC converter.

9. System (1) according to one of claims 6-8, wherein the power distribution unit (5a, 5b) is configured to actively distribute the plurality of loads among the first DC-DC converter (3a) and the second DC-DC converter (3b) in a key-on state of the vehicle, such that the first battery (2a) and the second battery (2b) are essentially balanced.

10. System (1) according to one of claims 6-9, wherein the power distribution unit (5a, 5b) comprises at least one switch to separate quality management loads from safety-critical loads.

11. System (1) according to one of claims 6-10, further comprising:
a first electric main fuse box, eMFB (7a), electrically connected to both, the first (3a) and the third (3c) DC-DC converter to supply selectively loads either by the first DC-DC converter (3a) or the third DC-DC converter (3b), and to the first power distribution unit (5a) and the second power distribution unit (5b); and
a second eMFB (7b) electrically connected to the second DC-DC converter (3b), the first power distribution unit (5a) and the second power distribution unit (5b).

12. System (1) according to claim 11, further comprising a switch (8) configured to selectively electrically connect either the first DC-DC converter (3a) or the third DC-DC converter (3c) to the first eMFB (7a).

13. System (1) according to one of claims 1-12, wherein the low DC voltage is a nominal voltage of 60V or less, preferably a nominal voltage of 12V, 24V or 48V.

14. System (1) according to one of claims 1-13, wherein the high voltage is a nominal voltage of more than 60V, preferably a nominal voltage of 200V, 400V, 800V or higher.

15. System (1) according to one of claims 1-14, wherein the high voltage batteries (5a, 5b) are adapted to power an electric motor of the vehicle.
